## Europäisches Patentamt

## European Patent Office

## Office européen des brevets

(11) Publication number: **0 094 214**
**B1**

(12) **EUROPEAN PATENT SPECIFICATION**

(45) Date of publication of patent specification: **31.01.90**

(51) Int. Cl.⁵: **G 05 B 19/417**

(21) Application number: **83302557.0**

(22) Date of filing: **06.05.83**

(54) **Industrial robot control.**

(30) Priority: **07.05.82 JP 76354/82**

(43) Date of publication of application:
**16.11.83 Bulletin 83/46**

(45) Publication of the grant of the patent:
**31.01.90 Bulletin 90/05**

(84) Designated Contracting States:
**DE FR GB**

(56) References cited:
**US-A-3 626 385**
**US-A-4 178 632**
**US-A-4 201 937**

(73) Proprietor: **FANUC LTD**
**3580, Shibokusa Aza-Komanba Oshino-mura**
**Minamitsuru-gun Yamanashi 401-05 (JP)**

(72) Inventor: **Inaba, Hajimu**
**5-3-16, Asahigaoka Hino-shi**
**Tokyo (JP)**
Inventor: **Torii, Nobutoshi**
**Fuyou-Haitsu 308, 65-4 Takakura-cho**
**Hachioji-shi Tokyo (JP)**

(74) Representative: **Billington, Lawrence Emlyn**
**et al**
**HASELTINE LAKE & CO Hazlitt House**
**28 Southampton Buildings**
**Chancery Lane**
**London WC2A 1AT (GB)**

## Description

An industrial robot may be controlled by means of a pretaught robot service program. Specifically, a robot control unit may be designed to sequentially read pretaught robot service programs out of a memory and may cause the industrial robot for example to service a machine tool based on these programs so as to change a workpiece, exchange tools or clean machining scraps. An industrial robot of this type generally has a mechanical zero point decided by the mechanical configuration of the robot. After power has been introduced to the system, the robot control unit restores the robot to the zero point by a predetermined zero point return operation, upon which the actual robot position stored internally of the control unit is set to zero to establish coincidence between the present position and the zero point. The control unit then causes the robot to execute a predetermined activity based on a previously taught robot service program.

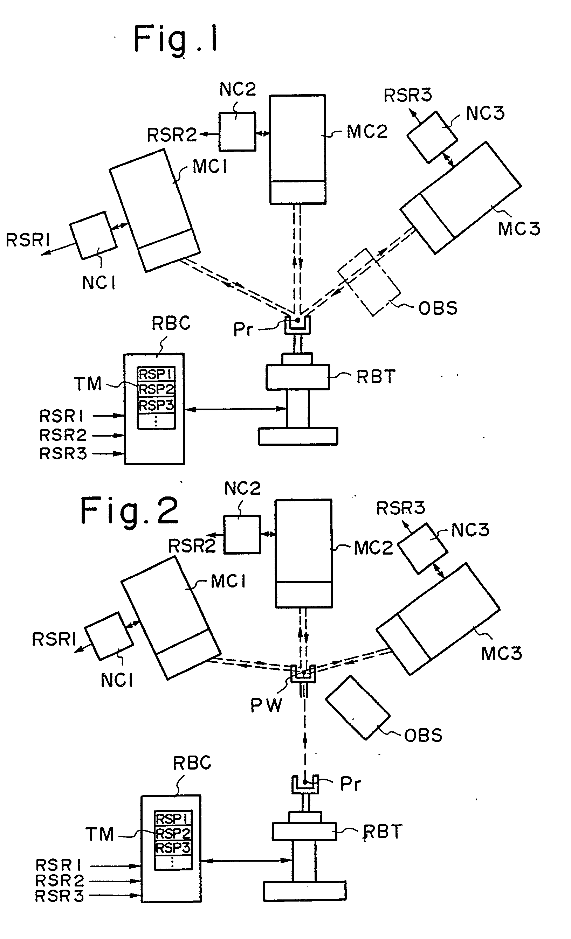

Let us consider a previously proposed arrangement, shown in Fig. 1, in which a single industrial robot RBT performs activities for a plurality of machine tools MC1, MC2, MC3 which are numerically controlled by respective numerical control units NC1, NC2, NC3. In a case such as this, robot service programs RSP1, RSP2, RSP3 are created for respective ones of the services to be performed for the corresponding machine tools, followed by storing the programs in an internal memory TM of a robot control unit RBC. Each of the robot service programs RSP1 through RSP3 is created in such a manner that the industrial robot RBT will start from a zero point Pr in servicing a predetermined one of the machine tools. Accordingly, when the numerical control unit NC1 of the machine tool MC1 issues a robot service request signal RSR1, the industrial robot RBT, placed under the control of the robot service program RSP1, starts from the zero point Pr, services the machine tool MC1 as prescribed, and then returns to the zero point Pr when the service is completed. The same is true when the numerical control units NC2, NC3 of the machine tools MC2, MC3 issue respective robot service request signals RSR2, RSR3. The industrial robot, under the control of the robot service programs RSP2, RSP3, starts from the zero point Pr and then returns to said point upon servicing the machine tools MC2, MC3, respectively.

Thus, with the previously proposed method of controlling an industrial robot, the movement of the robot always starts and ends at the zero point Pr as a service is performed, this being repeated as each robot is serviced. A disadvantage with the previously proposed control method is an increased travelling distance up to the machine tool, the result being a decline in robot service efficiency. Also, the greater travelling distance makes it more complicated to teach the robot. For example, when an obstacle OBS indicated by the dot-and-dash line in Fig. 1 is located in the vicinity of the robot, the robot sevice program must be so created that the robot will avoid the obstacle. With the previously proposed robot control method, this would involve movement over a great distance, thereby resulting in lower efficiency and in a more complicated teaching operation.

A solution to the above problem is proposed in our European patent application A1-0084957 which is relevant under Article 54(3) EPC and in which a reference point PW, serving as a reference for the robot services, is provided separately of Pr. As shown in Fig. 2, PW can be provided at the starting point for the various robot activities. With this arrangement, the industrial robot RBT is temporarily positioned at the reference point PW before servicing each of the machine tools MC1 through MC3. At the end of each service, therefore, the robot need not be returned to the zero point Pr, so that the robot travelling distance is reduced, operating time shortened and teaching simplified. By way of example, assume that the numerical control unit NC2 of the machine tool MC2 issues a robot service request signal RSR2 while the industrial robot RBT is servicing the machine tool MC1. In such case the industrial robot RBT will be returned to the reference point PW and will then immediately be placed under the control of the robot service program RSP2 to enable servicing of the machine tool MC2. Servicing efficiency is improved markedly because the robot need not travel the longer distance to the zero point Pr.

When the reference point PW has been decided in the arrangement of Fig. 2, it is necessary that a signal be generated indicating that the robot hand has returned to the reference point PW in response to a reference point return instruction, or that the robot is already at the reference point PW. The reason is that this will enable robot control to be performed in response to the robot service request signals RSR1 through RSR3 from the numerical control units of the machine tools only when the robot hand is at the reference point PW.

According to the present invention there is provided an industrial robot control method for controlling an industrial robot to service a plurality of machine tools one after another, the robot having a plurality of controlled axes and a machine origin providing a mechanical reference point to which the robot can be reset by a predetermined zero return operation, the method comprising controlling the robot on the basis of successive individual robot service programs to render predetermined services to successive respective ones of said machine tools, each individual robot service program being associated with an operating reference point return instruction to return the robot, after servicing the associated machine tool, to a reference point to stop and await initiation of the next robot service program, said reference point being designated at a position different from said machine origin in such manner as to shorten the distance travelled

by the robot between the machine tools, as compared with the distance it would have travelled if it had been returned to the machine origin after execution of each robot service program, the method further comprising

(a) storing coordinate values of the reference point;

(b) storing coordinate values of the actual positions of the axes of the industrial robot;

(c) calculating the difference values between the coordinate values of the reference point and the coordinate values of the actual positions of the axes of the industrial robot in response to an operating reference point return instruction; and

(d) producing a signal indicating that the industrial robot has returned to the reference point when all of the difference values are simultaneously zero, thereby ensuring that robot control is performed in response to robot service request signals from the machine tools only when the robot is at the reference point.

An embodiment of the present invention may provide an industrial robot control method and arrangement capable of reducing the travelling distance of an industrial robot servicing one or more machine tools.

An embodiment of the present invention may provide an industrial robot control method and arrangement capable of reducing the travelling distance of an industrial robot servicing one or more machine tools, thereby improving the efficiency of the servicing performed by the robot and simplifying the teaching of robot activities.

An embodiment of the present invention may provide an industrial robot control method and arrangement through which it is possible to confirm that an industrial robot is present at a reference point different from the mechanical zero point of the robot.

An embodiment of the present invention may provide an industrial robot control method and arrangement through which an industrial robot can be made to perform an activity for a machine tool in response to a robot service request from the machine tool only if the industrial robot is situated at a reference point.

An embodiment of the present invention may provide an industrial robot control method and arrangement through which a reference point can be changed with facility to take into account the arrangement of the industrial robot and the positions of any obstacles.

Features and advantages of an embodiment of the present invention will be apparent from the following description taken in conjunction with the accompanying drawings, in which like reference characters designate the same or similar parts throughout the figures thereof.

Fig. 1 is a schematic view showing an industrial robot and machine tool arrangement useful in describing a previously proposed industrial robot control method;

Fig. 2 is a schematic view showing an industrial robot and machine tool arrangement useful in describing another previously proposed industrial robot control method;

Figs. 3A and 3B are plan and side views, respectively, showing an industrial robot which operates in a cylindrical coordinate system and to which the present invention can be applied;

Fig. 4 is a block diagram illustrating a robot control apparatus for practicing a robot control method of the present invention;

Fig. 5 is a block diagram illustrating a circuit for discriminating return of an industrial robot hand to a reference point; and

Fig. 6 is a flow chart indicative of an industrial robot control method of the present invention.

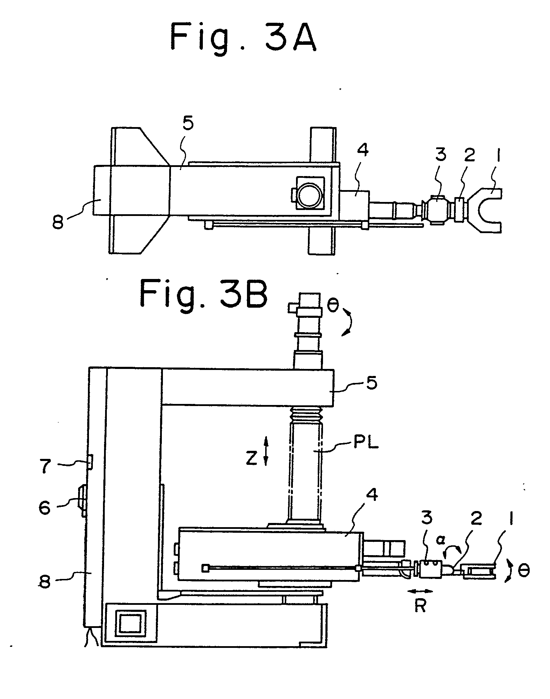

Figs. 3A and 3B are plan and side views, respectively, showing an example of an industrial robot which operates in a cylindrical coordinate system and to which the present invention can be applied. Numeral 1 denotes a mechanical hand for gripping, e.g., a workpiece when, say, it is to be exchanged. A wrist 2, connected at one end to the hand 1, is capable of being swiveled (α-axis) and bent up and down (β-axis). The wrist 2 is connected at the other end thereof to an arm 3 which can be freely extended and retracted (R-axis). A casing 4 receiving the arm 3 can be moved vertically (Z-axis) along a rotary shaft PL and rotated about the shaft PL (θ-axis). Numeral 5 denotes a frame, and 6 a teaching box 6 for teaching robot motions. An operator's panel 7 is provided for manipulation by an operator, as well as a control unit 8 for storing, in succession, the data taught by the teaching box 6, such as operating positions (points), operating speed and the various services, and for controlling the motion of the mechanical hand 1, wrist 2, arm 3 and casing 4 in accordance with the taught data.

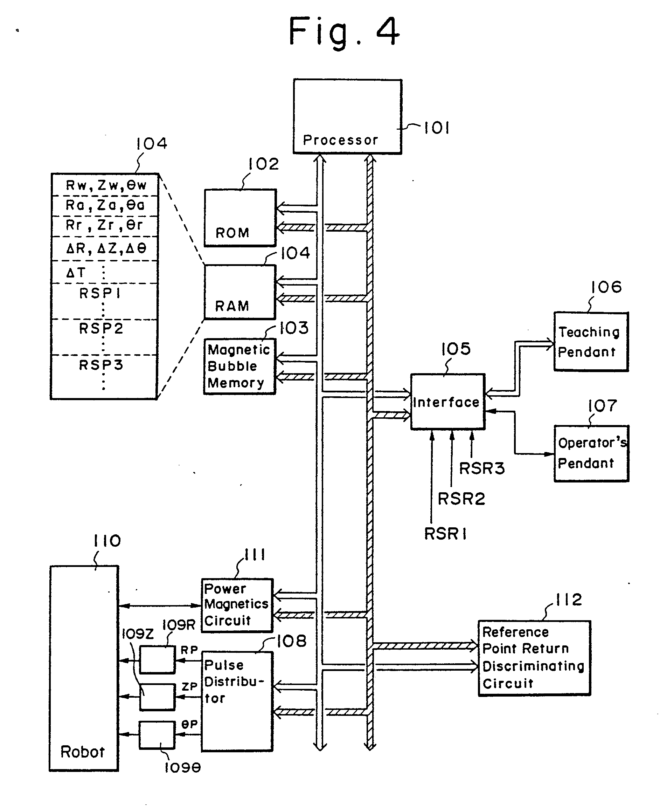

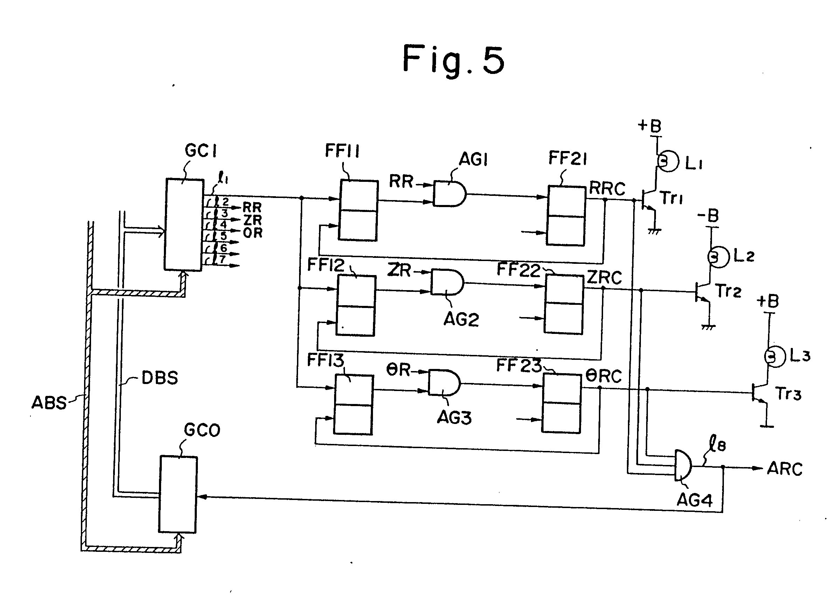

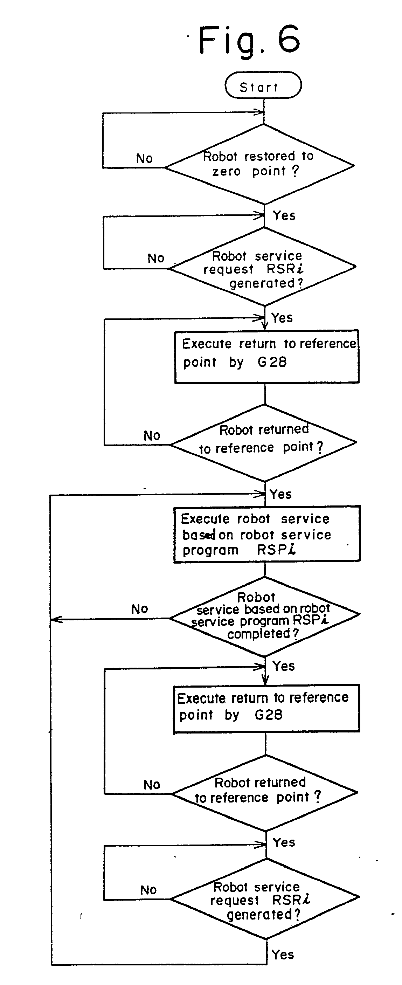

Fig. 4 is a block diagram illustrating a robot control apparatus for practicing a robot control method of the present invention, Fig. 5 is a block diagram illustrating a circuit for discriminating return of an industrial robot hand to a reference point, and Fig. 6 is a flow chart indicative of an industrial robot control method of the present invention.

Referring to Fig. 4, the robot control apparatus includes a processor 101, a control program memory (ROM) 102 for storing a control program, and a non-volatile memory such as a bubble memory 103 for storing various parameters as well as robot service programs RSP1, RSP2, RSP3 instructive of respective pretaught robot activities. The abovementioned parameters include (a) cylindrical coordinates ($R_w$, $Z_w$, $\theta_w$) of the reference point PW, (b) the order in which the controlled axes (i.e., the axes of motion) of the industrial robot are returned when a command for return to the reference point is generated, (c) the maximum operating range along each axis, and (d) the maximum feed speed along each axis. The apparatus further includes a random-access memory (RAM) 104 to which the contents of the non-volatile memory 103 are transferred when power is introduced. The RAM 104 also stores the actual robot position $(R_a, Z_a, \theta_a)$ along the respective axes, as well as amounts of remaining movement $(R_r, Z_r, \theta_r)$ along the respective axes. Numeral 105 denotes an interface for supervising the sending and receiving of data between external units and the robot control unit, 106 a teaching pendant, 107 an external operator's pendant, and 108 a pulse distributor. The latter receives inputs of incremental values $_\triangle R$, $_\triangle Z$, $_\triangle \theta$ along the respective axes produced successively by the processor 101, and executes pulse distribution computations based upon these incremental values for generating distributed pulses Rp, Zp, $\theta$p. It is assumed here that the robot moves along only one axis at a time. Numerals 109R, 109Z, 109$\theta$ designate known servo control circuits. Numeral 110 denotes the industrial robot. Indicated at 111 is a power magnetics circuit for supervising the sending and receiving of data between the robot control unit and the robot 110. Numeral 112 denotes a circuit for discriminating return to a reference point, the circuit being shown in greater detail in Fig. 5.

Referring to Fig. 5, the circuit 112 includes a gate circuit GC1 for decoding address signals which arrive on an address bus ABS, and for delivering data, received from the processor 101, over prescribed output lines $I_1$ through $I_7$. Also included is a gate circuit GC0 for decoding data address signals which arrive on the address bus ABS, and for delivering a logic signal, which arrives on line $I_8$, to the data bus DBS. Flip-flops FF11, FF12, FF13 are set by a reference point return instruction (G28), and are reset respectively by signals RRC, ZRC, $\theta$RC which indicate that the return to the reference point has been completed for the respective axes. When the coordinate values $R_a, Z_a, \theta_a$ indicative of the actual position along the respective axes R, Z, $\theta$ coincide with the coordinate values $R_w, Z_w, \theta_w$ indicative of the reference point PW along these axes (that is, when signals RR, ZR, $\theta$R go to logical "1") after the generation of the reference point return command, the outputs of AND gates AG1, AG2, AG3 go to logical "1". Flip-flops FF21, FF22, FF23 are set by the outputs of the respective AND gates AG1, AG2, AG3, and are reset when the conditions $R_a \neq R_w$, $Z_a \neq Z_w$, $\theta_a \neq \theta_w$ hold, respectively. Transistors $Tr_1$, $Tr_2$, $Tr_3$ are rendered conductive when the respective flip-flops FF21, FF22, FF23 are set, thereby lighting respective lamps L1, L2, L3 to indicate that the robot hand has been returned to the reference point along prescribed axes. An AND gate AG4 is provided for generating a signal ARC which indicates that the reference point return operation has been completed for all axes of the robot.

In operation, the processor 101 executes the following processing to control the position of the robot. Let $R_c$ be the R-axis coordinate of a target position. The processor 101, under the control of the control program, will compute an incremental value $R_I$ along the R axis using the formula:

$$R_c - R_a \rightarrow R_I \qquad (1)$$

and will treat the incremental value as an amount of movement $R_r$ remaining to be traversed along the R axis (i.e., $R_I \rightarrow R_r$). Next, using the feed speed Vc and a predetermined time period $_\triangle T$ given as a parameter, the processor 101 obtains an amount of movement $_\triangle R$ along the R axis for said time $_\triangle T$ from the following equation:

$$_\triangle R = Vc \cdot {_\triangle T} \qquad (2)$$

stores the value of $_\triangle R$ in the RAM 104 and delivers the same to the pulse distributor 108. The latter executes a pulse distribution computation based on $_\triangle R$ to generate distributed pulses RP which rotate the R-axis drive motor (not shown) through the servo control circuit 109R. The processor 101 adds the values of $_\triangle R$ at the end of each interval of $_\triangle T$ seconds, that is, performs the operation:

$$R_a + {_\triangle R} \rightarrow R_a \qquad (3)$$

to update the R-axis actual position $R_a$ stored in the RAM 104. At the same time, the processor 101 performs the operation given by:

$$R_r - {_\triangle R} \rightarrow R_r \qquad (4)$$

to update the amount of movement $R_r$ yet to be traversed, which is also stored in the RAM 104. The processor then determines whether the following relation holds:

$$R_r \geq {_\triangle R} \qquad (5)$$

If it does, then $_\triangle R$ is applied to the pulse distributor 108 to transport the robot hand. When $R_r < {_\triangle R}$ is determined to hold, $R_r$ is applied to the pulse distributor to transport the hand. When the hand arrives at the target position along the R axis (i.e., when $R_r = 0$), the processor 101 then sequentially reads the Z-axis position data $Z_c$ and $\theta$-axis position data $\theta_c$ and proceeds to control the position of the hand along these axes in the manner described above. When positioning has been completed along all axes, the processor 101 initiates execution of a service specified by a service code S00. When the service is completed, the robot 110 delivers a signal indicative of the fact to the robot control unit through the power magnetics circuit 111, the robot control unit responding by reading the next item of robot command data out of the RAM 104, whereby control is carried as described above.

Reference will now be had to the flowchart of Fig. 6 to describe a robot control method of the present invention. We will assume that the robot service programs RSP1, RSP2, RSP3 have already been taught by the teaching pendant 106 and recorded in the non-volatile memory 103. We will also assume that the coordinates $(R_w, Z_w, \theta_w)$ of the reference point PW, as well as the order in which the return to the reference point is effected along each axis (the order being the R axis, Z axis

and $\theta$ axis, consecutively), have already been recorded in the non-volatile memory 103. Further, assume that a reference point return instruction G28 has been inserted at the beginning of the robot service program RSP1, and that the same instruction (G28) has been inserted at the end of each of the robot service programs RSP1, RSP2, RSP3. Processing will then proceed as follows:

(1) Power is introduced to the robot control unit, upon which the robot service programs and parameters recorded in the non-volatile memory 103 are transferred to the RAM 104, this taking place under the control of the control program.

(2) The robot is returned to the zero point by manipulating the proper buttons or dials on the teaching pendant. Completion of the return to the zero point causes the coordinate values $R_a$, $Z_a$, $\theta_a$ indicative of the actual position along each axis to return to zero.

(3) Next, a mode selection switch provided on the teaching pendant is set to the playback mode, and the system awaits the generation of a robot service request signal from the machine tool side.

(4) When, say, the numerical control unit NC1 of the machine tool MC1 delivers a robot service request signal RSR1 through the interface 105, the processor 101 goes to the RAM 104 and reads out robot service data sequentially starting at the head of the robot service program RSP1 in response to the request signal RSR1, thereby initiating the start of robot control.

(5) The first item read out of the RAM 104 is the reference point return instruction G28. When this is performed, the processor 101 obtains the incremental values, $R_i$, $Z_i$, $\theta_i$ by performing the operations:

$$\left. \begin{array}{l} R_w - R_a \rightarrow R_i \\ Z_w - Z_a \rightarrow Z_i \\ \theta_w - \theta_a \rightarrow \theta_i \end{array} \right\} \quad (6)$$

The processor 101 then treats $R_i$, $Z_i$, $\theta_i$ as amounts of movement remaining to be traversed along the respective axes. In other words, the processor performs the following operations:

$$R_i \rightarrow R_r, \; Z_i \rightarrow Z_r, \; \theta_i \rightarrow \theta_r$$

The processor 101 thenceforth goes to the RAM 104 to read out the data indicating the order in which the return to the reference point is to be effected along each axis, and then proceeds to execute the reference point return processing in accordance with the specified order. Thus, the processor first performs the operation of Equation (2) to obtain the R-axis amount of movement $_\triangle R$ over the time interval $_\triangle T$, and executes positional control as described earlier to position the robot at the reference point PW along the R, Z and $\theta$ axes in that order. In response to the reference point return instruction G28, the processor 101 sets the flip-flops FF11, FF12, FF13 in the reference point return discriminating circuit 112, and produces the signals RR, ZR, $\theta$R when the remaining amounts of movement $R_r$, $Z_r$, $\theta_r$ along the respective axes become zero.

When the return to the reference point has been completed along each axis, the flip-flops FF21, FF22, FF23 in the discriminating circuit 112 are set, thereby driving the respective transistors $Tr_1$, $Tr_2$, $Tr_3$ into conduction to light the respective lamps L1, L2, L3, thus indicating the completion of the reference point return for each axis. Whan all three of the flip-flops FF21 through FF23 have been set, the AND gate AG4 will produce the signal ARC indicating that the return to the reference point has been accomplished.

(6) The processor 101 responds to the generation of the signal ARC by reading the next item of robot command data in the robot service program RSP1 to start the robot control operation prescribed. When the conditions $R_a \neq R_w$, $Z_a \neq Z_w$, $\theta_a \neq \theta_w$ are established as the robot is moved, the processor 101 resets the corresponding flip-flops FF21, FF22, FF23.

(7) Thereafter, control is performed based on the subsequent items of robot command data until the reference point return instruction G28 reappears and is read at the end of the robot service program RSP1. When this occurs, the robot hand is returned to the reference point PW through an operation identical to that described above. This ends the servicing of the machine tool MC1 based on the program RSP1.

(8) The system now enters a stand-by mode awaiting the generation of the robot service request signal RSR2 from the machine tool MC2, or the robot service request signal RSR3 from the machine tool MC3. When either signal is generated, the processor 101 checks to determine whether the signal ARC, indicating completion of the reference point return operation, has been generated. If a robot service request signal has not yet been generated, then the system waits until one is.

(9) When a robot service request signal is generated and the robot hand is at the reference point PW at such time, the robot will be controlled based on the robot service program RSP2 or RSP3, and the machine tool MC2 or MC3 will be serviced starting from the reference point PW in the manner described above.

In the foregoing description, only the reference point return instruction G28 is inserted in the robot service programs, and the reference point $(R_w, Z_w, \theta_w)$ is set and changed by means of an external unit, such as the teaching pendant 109 or operator's pendant 110. It should be noted, however, that the coordinates of the reference point can be commanded (i.e., inserted in the robot service program) along with the reference point return instruction G28 in the following manner:

$$G28 \; R_{\square \, \square ... \square} \; Z_{\triangle \, \triangle ... \triangle} \; \theta_{oo...o} \quad (4)$$

Also, a reference point return command can be issued using an external unit, and not just inserted in the program as an instruction. In addition, an arrangement can be adopted wherein the axis-by-axis order in which the robot hand is returned to the reference point is changed, or wherein the robot hand is returned to the reference point along all axes simultaneously. It is also possible to provide a limit switch or proximity sensor in the vicinity of the reference point to detect that the robot hand has arrived at the reference point. The switch, for example, would produce an output signal in response to arrival at the reference point, whereas the sensor could be adapted to produce an analog signal above or below a predetermined level.

It has been described that the robot hand is returned to the reference point along the three controlled axes R, Z and θ. However, the return to the reference point can be performed for only one or two of these axes if desired.

Thus, according to the present embodiment, a suitable reference point is preset and the robot is returned to the reference point after servicing each machine tool. This makes it possible to shorten the robot travelling distance and, hence, to both improve the efficiency at which the robot performs services and simplify the teaching operation.

## Claims

1. An industrial robot control method for controlling an industrial robot (RBT) to service a plurality of machine tools (MC1, 2, 3) one after another, the robot having a pluluty of controlled axes (R, Z, θ), and a machine origin (Pr) providing a mechanical reference point to which the robot (RBT) can be reset by a predetermined zero return operation, the method comprising controlling the robot (RBT) on the basis of successive individual robot service programs to render predetermined services to successive respective ones of said machine tools, · each individual robot service program being associated with an operating reference point return instruction to return the robot, after servicing the associated machine tool, to a reference point (PW) to stop and await initiation of the next robot service program, said reference point being designated at a position different from said machine origin (Pr) in such manner as to shorten the distance travelled by the robot between the machine tools, as compared with the distance it would have travelled if it had been returned to the machine origin (Pr) after execution of each robot service program, the method further comprising

(a) storing coordinate values ($R_w$, $Z_w$, $θ_w$) of the reference point (PW);

(b) storing coordinate values ($R_a$, $Z_a$, $θ_a$) of the actual positions of the axes (R, Z, θ) of the industrial robot (RBT);

(c) calculating the difference values between the coordinate values ($R_w$, $Z_w$, $θ_w$) of the reference point (PW) and the coordinate values ($R_a$, $Z_a$, $θ_a$) of the actual positions of the axes (R, Z, θ) of the industrial robot (RBT) in response to an operating reference point return instruction; and

(d) producing a signal (ARC) indicating that the industrial robot (RBT) has returned to the reference point (PW) when all of the difference values are simultaneously zero thereby ensuring that robot control is performed in response to robot service request signals (RSR1 through RSR3) from the machine tools only when the robot is at the reference point (PW).

2. An industrial robot control method according to claim 1, wherein said signal (ARC) is produced when an AND gate (AG4) receives signals indicating that all said difference values are zero simultaneously.

3. An industrial robot control method according to claim 1 or 2, further including the step of controlling the order of returning the axes (R, Z, θ) of the industrial robot of the reference point (PW).

4. An industrial robot control method according to any preceding claim, wherein each reference point return instruction is included in the associated robot service program.

5. An industrial robot control method according to claim 5, wherein the first robot service program contains two reference point return instructions, one at the end as aforesaid, and one at the beginning to position the robot (RBT) at said reference point (PW) from the machine origin (Pr) before the first predetermined service is rendered.

## Patentansprüche

1. Steuerverfahren für einen Industrie-Roboter (RBT) zum Bedienen einer Vielzahl von Werkzeugmaschinen (MC1, 2, 3) eine nach der anderen, wobei der Roboter eine Veilzahl von gesteuerten Achsen (R, Z, θ) aufweist und ein Bearbeitungsanfangspunkt (Pr) vorgesehen ist, der einen mechanischen Bezugspunkt darstellt, zu dem der Roboter (RBT) durch eine vorbestimmte Nullpunktrückkehroperation rückgeführt werden kann, welches Verfahren das Steuern des Roboters (RBT) auf der Grundlage aufeinanderfolgender individueller Roboterbedienungsprogramme umfaßt, um vorbestimmte Bedienungsvorgänge für aufeinanderfolgende der Werkzeugmaschinen zu leisten, wobei jedes individuelle Roboterbedienungsprogramm einem Betriebsbezugspunkt-Rückkehrbefehl zugeordnet ist, um den Roboter nach dem Bedienen der zugeordneten Werkzeugmaschine zu einem Bezugspunkt (PW) zurückzuführen, zu stoppen und das Initiieren des nächsten Roboterbedienungsprogramms abzuwarten, welcher Bezugspunkt bei einer Position bestimmt ist, die unterschiedlich von derjenigen des Bearbeitungsanfangspunkts (Pr) ist, und zwar in einer derartigen Weise, daß die Entfernung, die von dem Roboter zwischen den Werkzeugmaschinen zurückzulegen ist, verglichen mit der Entfernung verkürzt wird, die er zurückzulegen gehabt hätte, wenn er nach dem Ausführen jedes Roboterbedienungsprogramms zu dem Bearbeitungsanfangspunkt (Pr) zurückgekehrt wäre, welches Verfahren ferner Schritte umfaßt zum

(a) Speichern von Koordinatenwerten ($R_w$, $Z_w$, $θ_w$), des Bezugspunkts (PW);

(b) Speichern von Koordinatenwerten ($R_a$, $Z_a$, $θ_a$)

der Istpositionen der Achsen (R, Z, θ) des Industrie-Roboters (RBT),

(c) Berechnen der Differenzwerte zwischen den Koordinatenwerten (R$_w$, Z$_w$, θ$_w$) des Bezugspunkts (PW) und den Koordinatenwerten (R$_a$, Z$_a$, θ$_a$) der Istpositionen der Achsen (R, Z, θ) des Industrie-Roboters (RBT) in Reaktion auf einen Betriebsbezugspunkt-Rückkehrbefehl und

(d) Erzeugen eines Signals (ARC), das angibt, daß der Industrie-Roboter (RBT) zu dem Bezugspunkt (PW) zurückgekehrt ist, wenn alle der Differenzwerte gleichzeitig Null sind, um dadurch sicherzustellen, daß die Roboter-Steuerung in Reaktion auf Roboterbedienungs-Anforderungssignale (RSR1 bis RSR3) von den Werkzeugmaschinen nur dann ausgeführt wird, wenn sich der Roboter bei dem Bezugspunkt (PW) befindet.

2. Steuerverfahren für einen Industrie-Roboter nach Anspruch 1, bei dem das Signal (ARC) erzeugt wird, wenn ein UND-Glied (AG4) Signale empfängt, die angeben, daß alle der Differenzwerte gleichzeitig Null sind.

3. Steuervarfahren für einen Industrie-Roboter nach Anspruch 1 oder 2, das ferner einen Schritt enthält zum Steuern der Reihenfolge des Rückkehrens der Achsen (R, Z, θ) des Industrie-Roboters bezüglich des Bezugspunkts (PW).

4. Steuerverfahren für einen Industrie-Roboter nach einem der vorhergehenden Ansprüche, bei dem jeder Bezugspunkt-Rückkehrbefehl in dem zugeordneten Roboterbedienungsprogramm enthalten ist.

5. Steuerverfahren für einen Industrie-Roboter nach Anspruch 4, bei dem das erste Roboterbedienungsprogramm zwei Bezugspunkt-Rückkehrbefehle enthält, und zwar einen an dem Ende, wie vorher erwähnt, und einen an dem Beginn, um den Roboter (RBT) bei dem Bezugspunkt (PW) von dem Bearbeitungsanfangspunkt (Pr) aus zu positionieren, bevor der erste vorbestimmte Bedienungsvorgang geleistet wird.

**Revendications**

1. Un procédé de commande de robot industriel pour commander un robot industriel (RBT) pour effectuer la maintenance d'un ensemble de machines-outils (MC1, 2, 3) l'une après l'autre, le robot présentant un ensemble d'axes commandés (R, Z, θ), et une origine mécanique (Pr) procurant un point de référence mécanique auquel le robot (RBT) peut être réinitialisé par une opération de retour à zéro prédéterminée, le procédé comprenant la commande du robot (RBT) sur la base de programmes de maintenance individuels successifs par robot afin d'assurer des maintenances prédéterminées à des machines-outils respectives successives desdites machines-outils, chaque programme de maintenance individuel par robot étant associé à une instruction de retour au point de référence fonctionnel pour ramener le robot, après la maintenance de la machine-outil associée, à un point de référence (PW) pour arrêt et attente du lancement du programme de maintenance suivant par robot, ledit point de référence étant désigné à un emplacement différent de ladite origine mécanique (Pr) de manière telle à raccourcir la distance parcourue par le robot entre les machines-outils, comparée à la distance que celui-ci aurait parcouru s'il avait été ramené à l'origine mécanique (Pr) après exécution de chaque programme de maintenance par robot, le procédé comprenant en outre:

(a) la mémorisation des valeurs de coordonnée (R$_w$, Z$_w$, θ$_w$) du point de référence (PW);

(b) la mémorisation des valeurs de coordonnée (R$_a$, Z$_a$, θ$_a$) des positions effectives des axes (R, Z, θ) du robot industriel (RBT);

(c) le calcul des valeurs de différence entre les valeurs de coordonnée (R$_w$, Z$_w$, θ$_w$) du point de référence (PW) et des valeurs de coordonnée (R$_a$, Z$_a$, θ$_a$) des positions effectives des axes (R, Z, θ) du robot industriel (RBT) en réponse à une instruction de retour au point de référence fonctionnel; et

(d) la production d'un signal (ARC) indiquant que le robot industriel (RBT) a été ramené au point de référence (PW) lorsque la totalité des valeurs de différence sont simultanément égales à zéro en assurant ainsi que la commande du robot est effectuée en réponse aux signaux de demande de maintenance par robot (RSR1 à RSR3) provenant des machines-outils seulement lorsque le robot se trouve au point de référence (PW).

2. Un procédé de commande de robot industriel selon la revendication 1, dans lequel ledit signal (ARC) est produit lorsqu'une porte ET (AG4) reçoit des signaux indiquant que la totalité desdites valeurs de différence est simultanément égale à zéro.

3. Un procédé de commande de robot industriel selon la revendication 1 ou 2, comprenant en outre les opérations consistant à commander l'ordre de ramener les axes (R, Z, θ) du robot industriel au point de référence (PW).

4. Un procédé de commande de robot industriel selon l'une quelconque des revendications précédentes, dans lequel chaque instruction de retour au point de référence est comprise dans le programme de maintenance associé par robot.

5. Un procédé de commande de robot industriel selon la revendication 4, dans lequel le premier programme de maintenance par robot contient deux instructions de retour au point de référence, l'une à la fin comme indiqué précédemment, et l'autre au commencement pour positionner le robot (RBT) audit point de référence (PW) depuis l'origine mécanique (Pr) avant que la première maintenance prédéterminée soit effectuée.

# Fig.1

# Fig.2

1

# Fig. 3A

# Fig. 3B

# Fig. 4

# Fig. 5

EP 0 094 214 B1

# Fig. 6

Start

Robot restored to zero point ?
No
Yes

Robot service request RSR$i$ generated?
No
Yes

Execute return to reference point by G28

Robot returned to reference point?
No
Yes

Execute robot service based on robot service program RSP$i$

Robot service based on robot service program RSP$i$ completed?
No
Yes

Execute return to reference point by G28

Robot returned to reference point ?
No
Yes

Robot service request RSR$i$ generated?
No
Yes